# EUROPEAN PATENT APPLICATION

(11) **EP 2 008 614 A1**
(43) Date of publication of application: **31.12.2008**
(21) Application number: 08017136.6
(22) Date of filing: 10.01.2003
(51) Int. Cl.: A61C 15/00, A61C 15/04, A61C 17/20

(54) **Vibrating oral care device**

(30) Priority: 15.01.2002 US 47760; 23.12.2002 US 328677
(62) Divisional of application: 03713224.8
(71) Applicant: The Gillette Company, Boston, Massachusetts 02199 (US)
(72) Inventor: Masterman, Thomas, Craig, Brookline MA 02446 (US); Tyndall, David, Vivian, Medway MA 02053 (US); Mangan, Edward, J., Southboro MA 01772 (US); Rich, Christopher, Cambridge MA 02138 (US); Jones, Gordon, Albany CA 94760 (US)
(74) Representative: Ebner von Eschenbach, Jennifer

(57) **Abstract**

A vibrating oral care device, including:
a housing which can be gripped by human fingers;
a battery within the housing;
a flexible element having a long dimension, wherein the flexible element is releaseably secured into an end portion of the vibrating oral care device;
an electric motor having an eccentric weight attached thereto for vibrating the flexible element; and
a switch for electrically connecting the battery to the electric motor;

wherein the flexible element further includes a rib that mates with the end portion of the vibrating oral care device to releaseably secure the flexible element to the vibrating oral care device.

## Description

The invention relates generally to the field of oral care, and in particular to interdental cleaning. More specifically, the invention relates to a vibrating oral care device for cleaning and stimulating interdental areas.

Good oral care habits are necessary in order for a person to maintain healthy teeth and gums. Brushing the teeth twice daily with a manual or electric brush is the primary oral care practice used by most people. Dentists also recommend flossing the interdental spaces with dental floss daily. However, the vast majority of the populace does not follow this recommendation for a variety of reasons. As a result, the interdental spaces of most people do not receive the necessary care on a daily basis.

The wooden toothpick is another means of cleaning the interdental spaces. In one form, the toothpick is about 2 inches long and is cylindrical in cross section. This type of toothpick tapers to a point at both ends. The toothpick is used by inserting one end between two teeth and then moving the toothpick in a variety of ways to clean the interdental space. Both ends of the toothpick are usually used during cleaning. At the end of the cleaning session, the toothpick is discarded.

The wooden toothpick is not a popular form of interdental cleaning. People are concerned about getting splinters between their teeth. Further, the toothpick, for sanitary reasons, is typically discarded after each use. It would be desirable to develop a non-splintering toothpick which is convenient and easy for consumers to use, and which can be used for several months before being replaced.

U.S. Patent 5,839,895 discloses an apparatus including a vibrator and a shaft with one end mounted to the vibrator. Vibrational motion is transferred to the shaft and to a tip mounted on the other end of the shaft. The apparatus uses a vibrational massage to treat and enhance treatment of oral tissue. The apparatus provides a treatment used for the application of medicaments to oral tissue, the placement of filling materials in prepared cavities, the treatment of dry sockets, burnishing in desensitizers, placement and cementation of inlays and onlays and treatment of temporomandibular joint disease.

The '895 patent does not disclose using a rigid element on the vibrator for cleaning interdental spaces. This patent also does not disclose toothpick tip shapes or materials that can be used for a toothpick which will not wear out quickly. Further, the vibrator is operated between 2000rpms and 8500rpms. This frequency of operation in an oral care instrument has been perceived by some people to be weak and of poor quality. The '895 patent does not disclose a cap for covering the tip and thus does not provide protection for a tip which might be used over the course of several months.

The present invention is directed to overcoming one or more of the problems set forth above. Briefly summarized, according to one aspect of the present invention, a vibrating oral care device for cleaning interdental spaces includes a housing which can be gripped by human fingers. A battery is located within the housing. An electric vibrator is also located within the housing. A switch is used to electrically connect the battery to the vibrator. A rigid element extends from one end of the housing and is sized to be able to be penetrated into an interdental space. When the switch is operated to connect the battery to the vibrator, the vibrator vibrates and causes the rigid element to vibrate.

These and other aspects, objects, features and advantages of the present invention will be more clearly understood and appreciated from a review of the following detailed description of the preferred embodiments and appended claims, and by reference to the accompanying drawings.

### BRIEF DESCRIPTION OF THE DRAWINGS

FIG. 1 is a side view of a vibrating oral care device according to the invention;
FIG. 2 is an exploded side view of the vibrating oral care device of Fig. 1;
FIG. 3 is a schematic diagram of an electric circuit used in the vibrating oral care device of Fig. 1;
FIG. 4 is a perspective view of an eccentric electric motor used in the vibrating oral care device of Figs. 1 and 2;
Fig. 5 is an alternative embodiment of the main housing portion;
Fig. 6 is an enlarged view of the rigid element; and
Fig. 7 is a side view of an alternative embodiment of a vibrating oral care device.

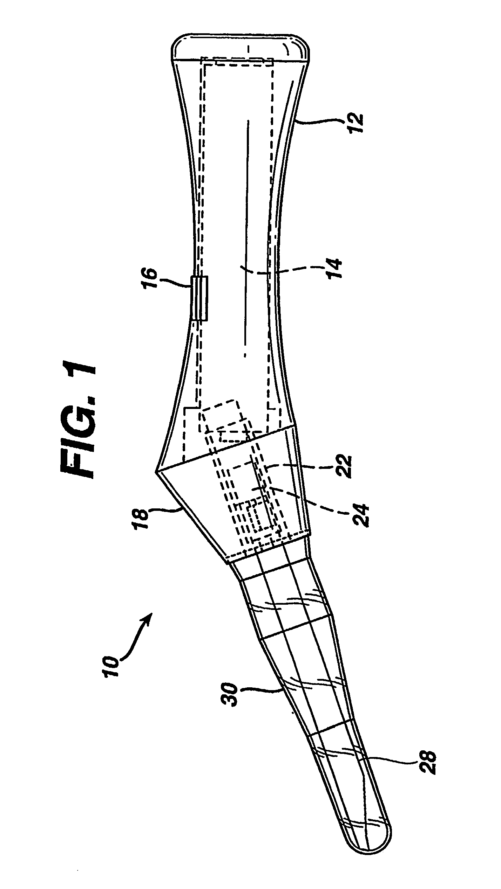

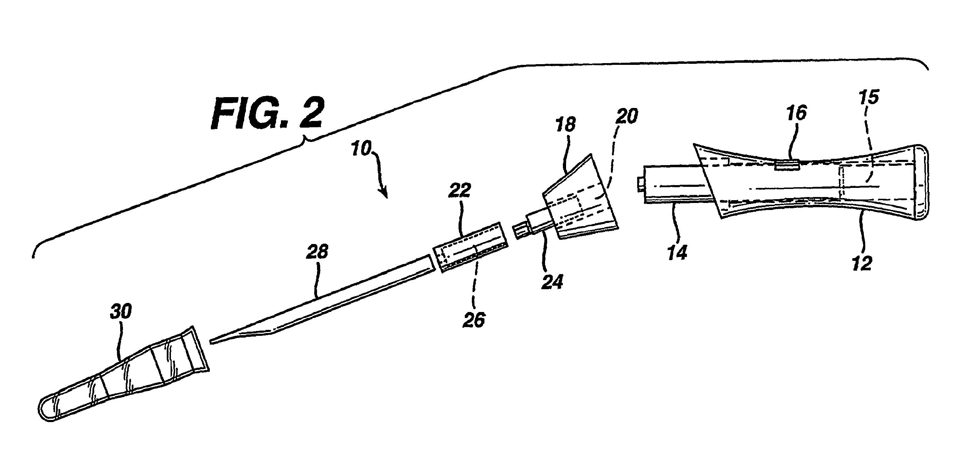

Beginning with FIGs. 1 and 2, there is shown a vibrating oral care device 10 for cleaning interdental spaces. A main plastic housing portion 12 encloses a battery 14. The housing is generally circular in cross-section and encloses a cylindrical hollow space 15 for the battery. In Fig. 2 the battery is shown protruding partially from the housing. The battery is preferably an alkaline, non-rechargeable AAA battery. Alternatively, a AA battery can be used, or, for a very compact toothpick, a AAAA alkaline battery can be used.

A pressure sensitive switch 16 is located on the surface of housing portion 12. A forward plastic housing portion 18 is secured to housing portion 12. Portion 18 has a generally circular cross-section, and tapers from where it is secured to portion 12 to its opposite end. Portion 18 is oriented at an acute angle relative to the long axis of battery 14. Portion 18 encloses a cylindrical, hollow space 20 which receives a cylindrically shaped, plastic support member housing portion 22.

Housing portions 12, 18 and 22 are preferably made of a foamed Santoprene (a thermoplastic vulcanate of polypropylene and rubber). The Santoprene is foamed with 2 weight % Clariant Hydrocerol BIH-40-E, has a hardness of 40 Shore D and has a flexural modulus of 1,250psi. This material assists in dampening the vibrations which are transmitted to a human hand holding the vibrating toothpick. Other materials which can be used are (a) a Prevail 3050 Acrylonitrile-Butadiene-Styrene (ABS) Pellethane Blend (blended with polyurethane) with a hardness of 62 Shore D and a flexural modulus of 50,000psi, and (b) ABS with a hardness of 70 Shore D and a flexural modulus of 350,000psi.

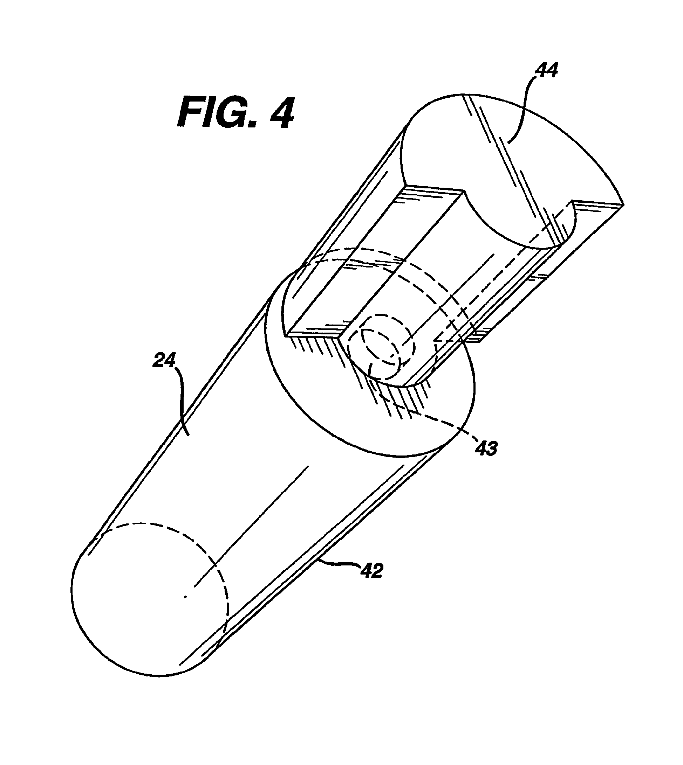

An eccentric electric motor (vibrator) 24 is inserted into one end of portion 22 into a cylindrical hollow space 26. Operation of the motor will be described in further detail below with reference to Fig. 4. A plastic toothpick (rigid element) 28 is inserted into the other end of portion 22. It can be seen that the long axis of the toothpick is at an acute angle to the long axis of the battery and housing portion 12. This arrangement allows easier placement of the toothpick in hard to reach locations in a human mouth. Preferably the motor and toothpick are not in direct contact with each other as direct contact would require more power, thus reducing battery life. A clear plastic cap 30 for protecting the toothpick is mounted by a friction fit onto housing portion 22.

It should be noted that in this embodiment only cap 30 is designed to be removed by the consumer. All of the other pieces of the vibrating oral care device are secured together by adhesive or other means. As such, when the battery and/or toothpick wear out, the vibrating oral care device is discarded. Alternatively, the housing can include a door for replacing the battery.

In another embodiment, the toothpick can be releasably secured to portion 22 such that the toothpick can be replaced. This can be accomplished by incorporating two or more ribs on the portion of toothpick 28 which is inserted into housing portion 22. The ribs extend perpendicular to the long dimension of the toothpick. Two or more corresponding mating groves are provided on the inside surface of portion 22. When the toothpick is inserted into portion 22, the ribs mate with the grooves to releasably secure the toothpick to the housing portion. The ribs and grooves should be designed so that it takes at least about 1.5 pounds of force to pull the toothpick out of housing portion 22.

The vibrating oral care device with cap 30 preferably weighs between about 7.5-35 grams, more preferably weighs between about 10-30 grams, and most preferably weighs between about 15-25 grams. If the weight is below about 7.5 grams the vibrating oral care device is perceived as being "cheap", and if the weight is above about 35 grams, it is not viewed as being compact. The device's length is preferably between about 1.75-4.25 inches, more preferably between about 2.25-4.00 inches, and most preferably between about 2.75-3.90 inches. If the device is less than about 1.75 inches, it becomes hard to hold and manipulate, and if it is longer than about 4.25 inches, it is not seen as compact and disposable.

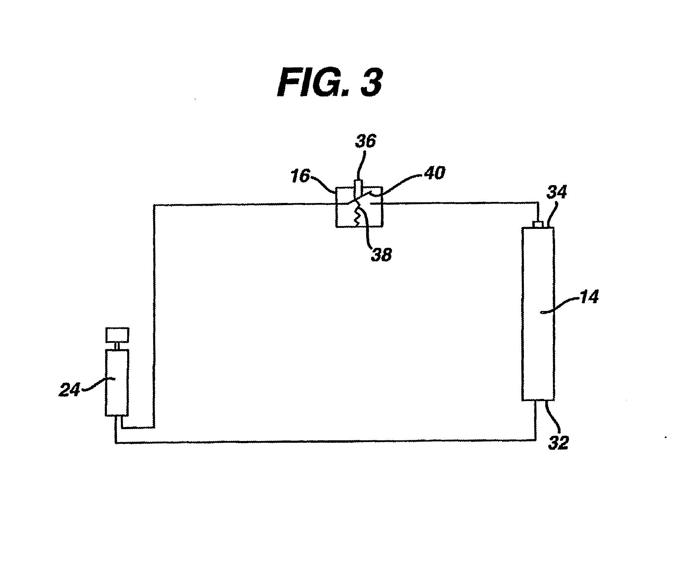

Turning to Fig. 3, a schematic electrical circuit is disclosed which is used in the vibrating oral care device. A first terminal 32 of battery 14 is electrically connected to eccentric electric motor 24. A second terminal 34 of the battery is connected to switch 16. The switch is also electrically connected to motor 24. When a person presses a button 36 of switch 16, the force of a compression spring 38 is overcome, and a contact 40 is closed to complete the circuit. Once the circuit is completed, the voltage from battery 14 is applied to motor 24, causing the motor to rotate. When the person stops pressing button 36, spring 38 moves contact 40 to open the circuit, stopping rotation of the motor. Alternatively, the switch can be a latching type switch which will remain in the on position even after pressure is removed from the switch. In this case, the switch is pressed or moved to turn the circuit. The voltage and current can be controlled by the circuit design to effect the rotational speed of the motor.

Fig. 4 is a perspective view of eccentric electric motor 24. The electric motor itself (not shown) is located inside a motor housing 42. The electric motor rotates a shaft 43 which is connected to and rotates an eccentric weight 44. Rotation of eccentric weight 44 causes a vibration. The frequency of the vibration is preferably between about 8,600rpm to about 11,500rpm, more preferably between about 9,500rpm to about 10,500rpm, and most preferably about 10,000rpm. If the frequency gets significantly below 8,600rpm, the vibrating toothpick is perceived as being weak and of poor quality. If the frequency gets significantly above 11,500rpm, the toothpick is perceived as rattling, too aggressive, and annoying (reminding some people of a dentist's drill).

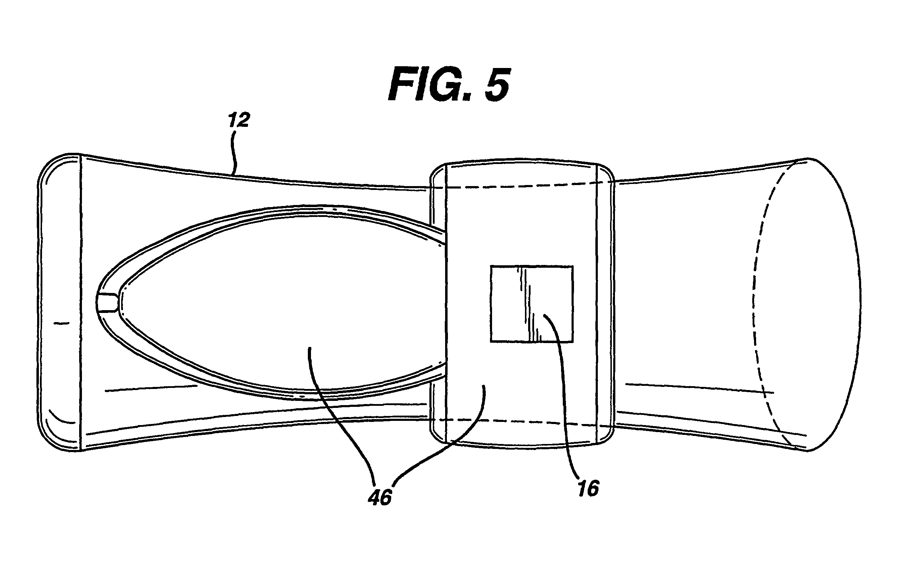

Fig. 5 shows an alternative embodiment of main housing portion 12. A rubber material 46 is overmolded onto the main plastic housing portion. The rubber material is preferably a Kraton-type material having a hardness of 30 Shore A. Rubber material 46 enhances the gripability of the housing portion and helps to reduce vibrations which are transmitted to the human hand.

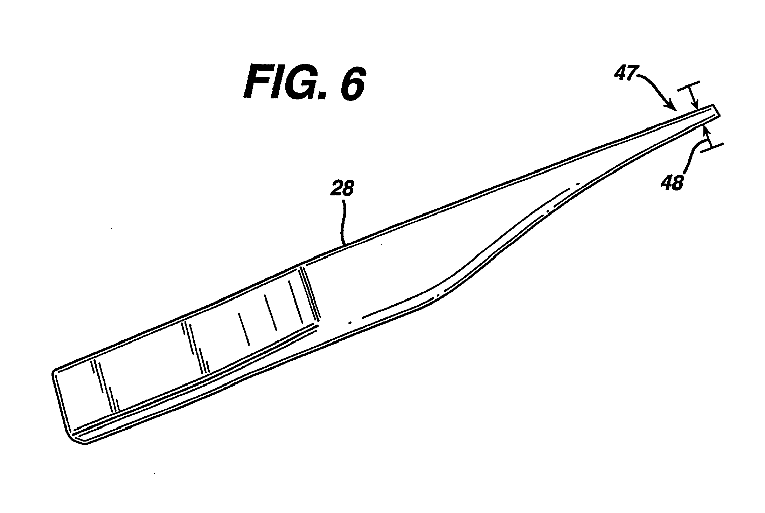

Fig. 6 provides a more detailed view of toothpick 28. A tip 47 of the toothpick preferably has a height 48 of about 0.035 inch and a thickness (perpendicular to the plane of the paper on which Fig. 6 is located) of about 0.017 inch. These dimensions provide good mouth comfort and good wear resistance. The length of the toothpick should preferably allow it to extend about 0.930 inches from the end of support member housing 22 from which it projects(see Fig. 2). If the toothpick is too short, it is difficult to reach teeth in the back of the mouth. If the toothpick is too long, it is too flexible. The toothpick is sized to be able to be penetrated into an interdental space (e.g. between the teeth or below the gum line).

The toothpick is preferably made of Zytel 158L which is a nylon 6,12 with 2.5% Pebax 2533 (a nylon elastomer such as polyetheresteramide. The Pebax enhances the toothpick's ability to slide between two teeth. Alternatively, the Pebax can be used in an amount of 7.5%. Nylon gives the best wear resistance. Running an injection mold for making the toothpick above 140 degrees F helps to further improve the wear resistance of nylons. The stiffness of nylon 6,12 can be reduced by adding a 25 Shore D nylon elastomer without adversely affecting the wear resistance of the toothpick. Materials to modify the surface properties of the toothpick can also be added (e.g. Teflon and/or kaolin clay). Texture in the form of molded-in ribs may be added to the toothpick.

Alternatively, a high solids, flexible toothpick can be used for delivering flavoring and/or medicaments to the oral cavity and especially between the teeth. A high solids flexible toothpick may contain a water insoluble support resin, a water-soluble polymer, a water-soluble monomeric species, and/or a polymer only swollen by water; and an antimicrobial agent, flavoring, whitener, fluoride compound, an anticalculus agent and/or foaming agent.

The water insoluble support resin can be, e.g., polystyrene, polyurethane, ethylene vinyl acetate (EVA), polyethylene, styrene/rubber, ethylene/propylene, or other acceptable, polymers. The water-soluble polymer can be, e.g., starches, polyvinyl alcohols, polyethylene oxides, hydroxyalkyl starches, hydroxyethyl and hydroxypropyl celluloses, polyacrylic acids, and gelatins. Most preferred are polyethylene oxides having a molecular weight between 100,000 and 5,000,000, e.g., Polyox water-soluble resins, and polyacrylic acids, e.g., Carbopol.

A water-soluble monomeric species may be an organic compound or inorganic compound. Examples of organic compounds include fatty acids and carbohydrates. Examples of inorganic compounds include ammonium salts. A water-swellable polymer is a polymer which is relatively insoluble (less than 1000 ppm at room temperature) in water but which can absorb at least 2 times its weight in water. Examples of water-swellable polymers include water-absorbing acrylics such as Salsorb 84, Salsorb 88, and Salsorb 90, all of which are available from Allied Colloids Corporation; cross-linked starch/sodium polyacrylate copolymers such as SanWet COS-960, SanWet COS-915, and SanWet COS-930, all of which are available from the Hoechst Celanese Corporation, and Waterlock A-180, which is available from Grain Processing Corporation; hydroxypropylmethylcelluloses such as Methocel, which is available from Dow Chemical Corporation; polyacrylic acids such as Carbopol 940, which is available from B.F. Goodrich Company; microcrystalline celluloses such as Avicel, which is available from FMC Corporation; chitosan pyrrolidone carboxylic acids such as Kytamer PC, which is available from Amerchol Corporation; acrylic acid/acrylonitrogen copolymers such as Hypan-SA-100H, which is available from Kingston Hydrogels Corporation; cross-linked potassium acrylates such as Liqua-Gel, which is available from Miller Chem. & Fertilizer Corporation; carboxymethylcelluloses such as Aquasorb B-315 (Na salt) and AQU-D3236 (Al/Na salt), both of which are available from Aqualen Corporation; and cross-linked polyacrylic acid polyalcohol grafted copolymers such as FAVOR SAB 800, which is available from Stockhausen Company. Two further examples of water-swellable polymers are Ultrasponge (available from MicroVesicular Systems Inc.), and Costech (available from Costech Corporation). The more preferred water-swellable polymers are the SanWets and Salsorbs.

Examples of substances that can be included in the composite for eventual release include antimicrobial agents, flavorants, whiteners, fluoride compounds, foaming agents, desensitizing agents, nutritional agents, odor-preventing agents, remineralizing agents, anticalculus agents, antiinflammatory agents, salivary gland stimulators, antifungal agents, and antiviral agents.

Examples of antimicrobial agents that can be used in the composite include bisguanides such as chlorhexidine and alexidine; quaternary ammonium compounds such as cetylpyridinium chloride, domiphen bromide, and benzalkonium chloride; zinc salts such as zinc chloride and zinc citrate; antibiotics such as chlortetracycline, tetracycline, actinobolin, streptomycin, kanamycin, neomycin, niddamycin, bacitracin, erythromycin, penicillin, rancemycin, gramicidin, saramycin, and polymixin B; as well as antiplaque enzymes such as mucinases, pancreatin, fungal enzymes, protease-amylase, dextranase, moimnase, zendium, amyloglucosidase, and glucose oxidase. The preferred antimicrobial agents for use in the composite are chlorhexidine and triclosan. When chlorhexidine is used, it is preferred to use its digluconate salt; the hydrochloride and diacetate salts can also be used.

Examples of flavorants include, e.g., peppermint, spearmint, or cinnamon, added as oils or compounded with structural plastic (e.g., PolyIff). These flavorants are available from International Flavors and Fragrances (IFF). Examples of whiteners include hydrogen peroxide, peroxyborate monohydrate, and other peroxy compounds. Examples of fluoride compounds include sodium fluoride, alkylammonium fluorides, stannous fluoride, sodium monofluorophosphate, etc.

Examples of foaming agents include surfactants like various Pluronics, which are available from BASF, and Tween. Examples of desensitizing agents include strontium chloride, strontium citrate, calcium oxalate, potassium nitrate, and potassium oxalate. Examples of nutritional agents include Vitamin C and Vitamin E. Examples of odor-preventing agents include zinc salts (e.g., zinc chloride and zinc citrate) and chlorophyll compounds. Examples of remineralizing agents include various calcium/phosphate systems.

Examples of anticalculus agents include zinc salts (e.g., zinc chloride and zinc citrate), tetrasodium pyrophosphate, and disodium dihydrogen pyrophosphate. Examples of anti-inflammatory agents include steroids (e.g., triamcinolone diacetate), salicylates (e.g., acetylsalicylic acid), and hormones (e.g., cortisone acetate). Examples of salivary gland stimulators include citric acid and pilocarpine. Examples of antifungal agents include nystatin, econazole nitrate, and clotrimazole. Examples of antiviral agents include AZT and trifluridine.

The composite may include other ingredients like dispersing agents (e.g., glycerol distearate) that can help provide a more uniform distribution of the substance throughout the composite. The composite may include, e.g., from 2% to 8% dispersing agent by weight. The high solids, flexible pick can be produced by injection molding, extrusion and compression molding.

In use a consumer picks up the vibrating oral care device by main housing portion 12 and removes cap 30. Either before or after inserting toothpick 28 between two teeth, the consumer presses button 36 to activate motor 24 which vibrates the toothpick. The vibration enhances the ease of inserting and removing the toothpick from between the teeth. The vibration also enhances cleaning. If used once a day for approximately 2 minutes, the vibrating toothpick should operate for about 3 months on a AAA alkaline battery. When the battery and/or the toothpick are worn out, the vibrating oral care device is discarded.

Referring to Fig. 2, a further alternative embodiment will be described. Switch 16 is moved from it's position on housing portion 12 to a position between one end of battery 14 and one end of motor 24. Housing portion 22 is sized to slide back and forth inside housing portion 18. A pair of protrusions (not shown project in opposite directions outward from housing portion 22 perpendicular to the long axis of portion 22. These protrusions ride in a pair of corresponding groves (not shown) inside housing portion 18 that extend parralel to the long axis of hollow space 20. The length of the groves determines the distance that portion 22 can travel.

When a person presses the toothpick against their teeth, portion 22 moves towards battery 14. The bottom of motor 24 closes the switch to complete the electrical circuit (Fig. 3), thus causing the device to vibrate. When the person pulls the device away from their teeth, spring 38 of switch 16 opens the switch to stop the motor and pushes housing portion 22away from battery 14.

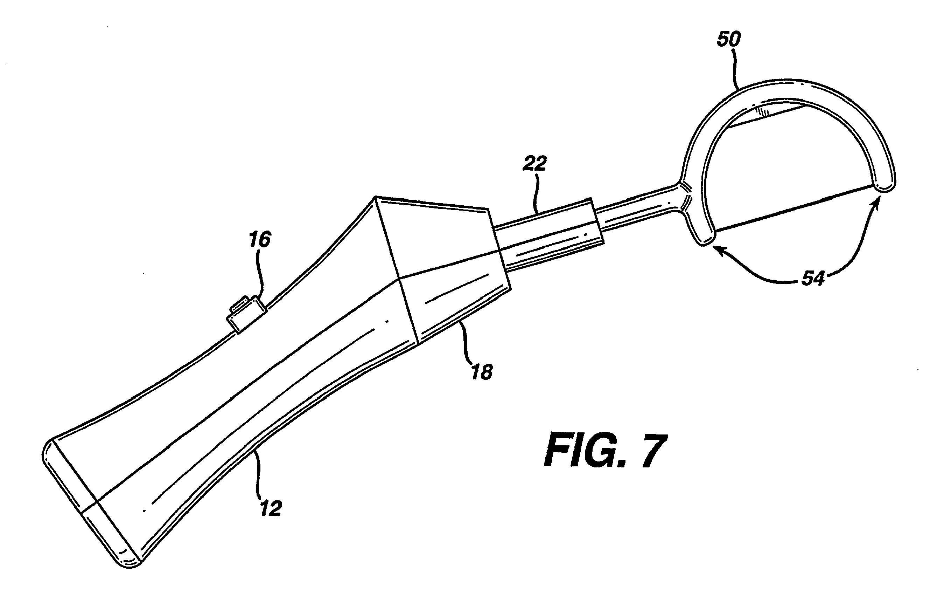

Turning to Fig. 7, another embodiment of an oral care device according to the present invention will be described. Elements of this embodiment which are the same as described in the paragraphs above will have the same reference numerals. The primary difference in this embodiment is that the rigid element is a flossing element 50 instead of a plastic toothpick. Element 50 has a piece of dental floss 52 tautly stretched across free ends 54 of the element.

Element 50 can be either permanently attached to portion 22 or removably attached to portion 22. If element 50 is permanently attached, then a new piece of floss is secured to free ends 54 each time the oral care device is used. Each free end has a notch (not shown). One end of a piece of new floss is wrapped around the notch on one of the free ends 54. Then the floss is pulled taut and wrapped around the notch in the other free end 54. After flossing is finished, the floss is unwrapped from the notches and discarded.

If element 50 is removably attached to portion 22, then it is a single-use element and is discarded after each use. The user would, for example, buy a 10 or 20 pack of elements 50. Each of these elements would already have a piece of floss tautly and permanently secured to ends 54. The floss can be secured to ends 54 by, for example, injection molding. The user simply inserts an element 50 into housing portion 22 prior to flossing. After the user is done flossing, the element is removed from portion 22 and discarded.

The invention has been described with reference to a preferred embodiment. However, it will be appreciated that variations and modifications can be effected by a person of ordinary skill in the art without departing from the scope of the invention.

### Features of the parent application include:

1. A vibrating oral care device, comprising:
   a housing which can be gripped by human fingers;
   a battery within the housing;
   an electric vibrator within the housing;
   a switch for electrically connecting the battery to the vibrator; and
   a rigid element extending from one end of the housing and sized to be able to be penetrated into an interdental space, whereby when the switch is operated to connect the battery to the vibrator, the vibrator vibrates and causes the rigid element to vibrate.
2. The oral care device of feature 1, wherein the battery is sealed inside the housing such that the battery cannot be removed from the housing without breaking at least a portion of the housing.
3. The oral care device of feature 1, wherein the battery is an alkaline battery.
4. The oral care device of feature 1, wherein the battery is non-rechargeable.
5. The oral care device of feature 1, wherein the battery is size AAA.
6. The oral care device of feature 1, wherein when the switch is pressured by, for example, a human finger, the vibrator vibrates, and when the pressure is released from the switch, the vibrator stops vibrating.
7. The oral care device of feature 1, wherein the vibrator includes an eccentric electric motor.
8. The oral care device of feature 7, wherein the motor rotates at a speed of between about 8600rpm to about 11,500rpm.
9. The oral care device of feature7, wherein the motor rotates at a speed of between about 9500rpm to about 10,500rpm.
10. The oral care device of feature 7, wherein the motor rotates at a speed of about 10,000rpm.
11. The oral care device of feature 1, wherein the rigid element is made of plastic.
12. The oral care device of feature 1, wherein the housing includes a support member, the vibrator being secured to one portion of the support member, the rigid element being secured to another portion of the support member.
13. The oral care device of feature 12, wherein the vibrator and rigid element are not in direct contact with each other.
14. The oral care device of feature 1, further including a cap which can be secured to the housing to cover the rigid element.
15. The oral care device of feature 14, wherein the cap is made of plastic.
16. The oral care device of feature 15, wherein the plastic is clear.
17. The oral care device of feature 1, wherein the housing is made of a foamed Santoprene.
18. The oral care device of feature 1, wherein the vibrating oral care device weighs between about 7.5 grams to about 35 grams.
19. The oral care device of feature 1, wherein the vibrating oral care device has a longest dimension of between about 1.75 inches to about 4.25 inches.
20. The oral care device of feature 1, wherein the housing further includes a rubber gripping portion which enhances gripability and reduces vibrations which are transmitted to human digits (i.e. fingers and thumb).
21. The oral care device of feature 1, wherein the rigid element has a free tip which has dimensions of about 0.035 inch in height and about 0.017 inch in thickness.
22. The oral care device of feature 1, wherein the rigid element extends about 0.930 inches from an end of the support member from which it projects.
23. The oral care device of feature 1, wherein the rigid element is made of nylon 6,12 with about 2.5% Pebax 2533.
24. The oral care device of feature 1, wherein the rigid element includes a material selected from the group consisting of Teflon, kaolin clay, and combinations thereof.
25. The oral care device of feature 1, wherein the battery is size AA.
26. The oral care device of feature 1, wherein the battery is size AAAA.
27. The oral care device of feature 1, wherein the rigid element is movable to operate the switch.
28. The oral care device of feature 1, wherein the rigid element is releasably secured to the housing.
29. The oral care device of feature 1, wherein the rigid element is a toothpick.
30. The oral care device of feature 1, wherein the rigid element is a flossing element.
31. The oral care device of feature 30, wherein the flossing element is permanently secured to the housing.
32. The oral care device of feature 30, wherein the flossing element is removably secured to the housing.
33. The oral care device of feature 30, wherein the flossing element has a piece of floss permanently secured to it.

## Claims

1. A vibrating oral care device, including:
a housing which can be gripped by human fingers;
a battery within the housing;
a flexible element having a long dimension, wherein the flexible element is releaseably secured into an end portion of the vibrating oral care device;
an electric motor having an eccentric weight attached thereto for vibrating the flexible element; and
a switch for electrically connecting the battery to the electric motor;
wherein the flexible element further includes a rib that mates with the end portion of the vibrating oral care device to releaseably secure the flexible element to the vibrating oral care device.

2. A vibrating oral care device according to claim 1, **characterized in that** the flexible element further includes a texture.

3. A vibrating oral care device according to claim 1, **characterized in that** the flexible element has a free end with a straight edge.

4. A vibrating oral care device according to claim 3, **characterized in that** the flexible element tapers to the free end.

5. A vibrating oral care device according to claim 1, **characterized in that** the flexible element further includes a water insoluble polymer, a water-soluble polymer, and an agent selected from the group consisting of an antimicrobial agent, a flavoring, a whitener, a remineralizing agent, a nutritional agent, a fluoride compound, an anti-calculus agent, and a foaming agent.

6. A vibrating oral care device according to claim 5, **characterized in that** the water-insoluble polymer is selected from the group consisting of polystyrene, polyurethane, ethylene vinyl acetate, polyethylene, styrene, rubber, ethylene, and propylene.

7. A vibrating oral care device according to claim 5, **characterized in that** the water-soluble polymer is selected from the group consisting of starches, polyvinyl alcohols, polyethylene oxides, hydroxyalkyl starches, celluloses, polyacrylic acids, and gelatins.

8. A vibrating oral care device according to claim 5, **characterized in that** the flexible element further includes a water-soluble monomeric species.

9. A vibrating oral care device according to claim 5, **characterized in that** the antimicrobial agent is selected from the group consisting of cetylpyridinium chloride, zinc salts, triclosan, and chlorhexidine.

10. A vibrating oral care device according to claim 5, **characterized in that** the agent is an oil.

11. A vibrating oral care device according to claim 1, **characterized in that** the frequency of vibration is between 8,600 rpm and 11,500 rpm.
